Europäisches Patentamt

European Patent Office

Office européen des brevets

(11) Veröffentlichungsnummer: **0 281 020**
**A2**

# (12) EUROPÄISCHE PATENTANMELDUNG

(21) Anmeldenummer: 88102831.0

(22) Anmeldetag: 25.02.88

(51) Int. Cl.⁴: **B01D 47/10** , B01D 47/04

(30) Priorität: 25.02.87 BG 78638/87

(43) Veröffentlichungstag der Anmeldung:
07.09.88 Patentblatt 88/36

(84) Benannte Vertragsstaaten:
AT BE CH DE ES FR GB IT LI NL SE

(71) Anmelder: STOPANSKO DRUZESTVO
"MECHATRON"
Quartal Darveniza
1156 Sofia(BG)

(72) Erfinder: Dorev, Pantscho Kirilov
Tolbuchin No. 3A
Boul Sofia(BG)
Erfinder: Konstantinov, Michail Spirov
Block 1-B, App. 76
Komplex Serdika Sofia(BG)
Erfinder: Vutov, Stefan Georgiev
Bardo-Strasse 7
Dobroslvz bei Sofia(BG)
Erfinder: Stavrev Stefan Borissov
Praga No. 2
Boul Sofia(BG)
Erfinder: Balabanov, Michail Michajlov
SimeonovVek-Str. Block 266-A
Sofia(BG)
Erfinder: Karagetschev, Peter Georgiev
Boruschtita-Str. Block 18-A
Sofia(BG)
Erfinder: Zvetkov, Zveti Bogdanov
N. MitschevStr. No. 27-B
Sofia(BG)
Erfinder: Kjutschukov, Georgi Ivanov
Komplex Nadejda Bl. 457
Sofia(BG)

(74) Vertreter: Finck, Dieter et al
Patentanwälte v. Füner, Ebbinghaus, Finck
Mariahilfplatz 2 & 3
D-8000 München 90(DE)

(54) **In Modulbauweise ausgeführte Vorrichtung für die Nassreinigung von Gas.**

(57) Die Vorrichtung hat einen horizontaler Körper (1), dem eine Gaswascheinheit (13) vorgeschaltet ist, in der das zu reinigende Gas zusammen mit Waschflüssigkeit durch zwischen querangeströmten Rohren (10) gebildete, einen Venturieffekt erzeugende Räume geführt und dabei mit der Waschflüssigkeit zur ersten Staubabscheidung kontaktiert wird. Das Gas wird dann durch einen nach oben geneigten Kollektor (23), der an seiner tiefsten Stelle einen Flüssigkeitsverschluß (26) aufweist, auf dem sich Staubagglomerate bilden, durch den Gitterboden (19) einer als Modul gebauten Schaumwa-

scheinheit (17) geführt, wo das Gas im Gegenstrom zu durch Düsen (21) abgegebene Waschflüssigkeit gebracht wird und durch Bildung von Schaum in einem Stabilisator (20) weiter gereinigt wird, ehe es über einen in Modulbauweise ausgeführten Separator (15) abgeführt wird. Durch die der Gaswascheinheit (13) nachgeordnete Schaumwascheinheit (17) läßt sich durch Abstimmen der aufeinanderfolgenden Reinigungsvorgänge eine wirtschaftliche Gasreinigung erreichen.

Fig.1

## IN MODULBAUWEISE AUSGEFÜHRTE VORRICHTUNG FÜR DIE NASSREINIGUNG VON GAS

Die Erfindung betrifft eine in Modulbauweise ausgeführte Vorrichtung für die Naßreinigung von Gas mit einem horizontalen Körper, dem gaseinlaßseitig wenigstens eine als Modul gebaute Gaswascheinheit mit quer zur Strömungsrichtung des Gases angeordneten Rohren, mit einer über den Rohren vorgesehenen Berieselungseinrichtung für eine Waschflüssigkeit und mit einem unter den Rohren angebrachten einstellbaren Verteiler für das Gas zugeordnet ist, und der gasauslaßseitig einen als Modul gebauten Separator mit Tropfenfänger aufweist.

Bei einer solchen, aus der US-PS 381 1252 bekannten Vorrichtung bilden die Rohre der Gaswascheinheit als Venturidüsen wirkende Räume, die eine Ansaugwirkung hervorrufen. Bodenseitig ist an dem Körper eine Wanne mit einer Einrichtung zur Schlammbeseitigung vorgesehen. Anstatt der Rohre können in der als Modul ausgebildeten Wascheinheit auch geriffelte Flächen, Netze oder andere Elemente vorgesehen werden.

Bei der bekannten Vorrichtung ist nur die Zuordnung einer einzigen als Modul ausgebildeten Wascheinheit möglich, so daß eine gezielte Gasreinigung im Hinblick auf spezielle physikalisch-chemische Parameter nicht möglich ist. Außerdem ist bei stark verschmutzten Abgasen die Reinigungswirkung unzureichend.

Die der Erfindung zugrunde liegende Aufgabe besteht deshalb darin, die Vorrichtung der gattungsgemäßen Art so zu gestalten, daß das Gas in aufeinanderfolgenden, aufeinander abgestimmten Stufen optimal gereinigt werden kann.

Diese Aufgabe wird ausgehend von der in Modulbauweise ausgeführten Vorrichtung der gattungsgemäßen Art durch eine in dem horizontalen Körper in Strömungsrichtung des Gases nach der Gaswascheinheit angeordnete, ebenfalls als Modul gebaute Schaumwascheinheit, welche einen Gitterboden, einen Schaumstabilisator und darüber angeordnete Sprühdüsen aufweist, und durch einen unterhalb der Schaumwascheinheit angeordneten, diese mit der Gaswascheinheit verbindenden, von einer Stirnwand und Seitenwänden des horizontalen Körpers sowie einem zur Gaswascheinheit nach unten geneigten Boden gebildeten Kollektor gelöst, wobei an der tiefsten Stelle des geneigten Bodens ein transversaler kegelförmiger Ablaufkanal mit Waschstutzen vorgesehen ist.

Mit der erfindungsgemäßen Vorrichtung ist es möglich, in horizontaler Anordnung Moduleinheiten abhängig von den physikalisch-chemischen Parametern der durch sie hindurchgehenden zu reinigenden Gase zu einer gesteuerten Gasreinigungsstraße mit aufeinanderfolgenden Modulwaschzonen zu integrieren, und zwar in einem gemeinsamen horizontalen Körper, wodurch Wartung und Betrieb sehr einfach und der für die Herstellung erforderliche Materialeinsatz relativ gering sind.

Anhand von Zeichnungen wird ein Ausführungsbeispiel der Erfindung näher erläutert. Es zeigt:

Fig. 1 einen Längsschnitt durch die Vorrichtung,

Fig. 2 den Schnitt A-A von Fig. 1 und

Fig. 3 im Schnitt B-B von Fig. 1 die Aufhängung der Rohre in der Gaswascheinheit.

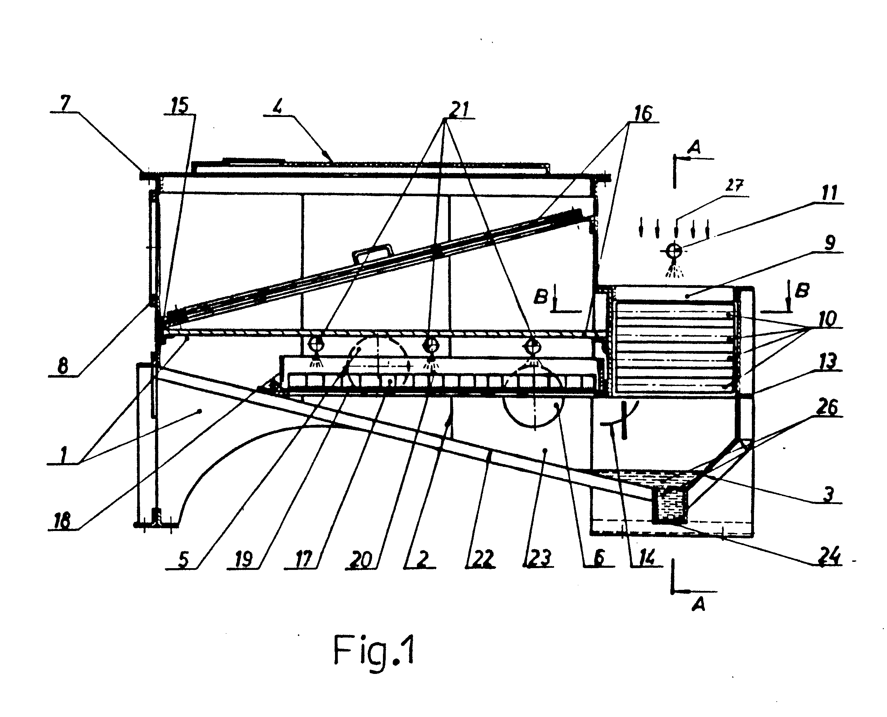

Die in Fig. 1 gezeigte, in Modulbauweise ausgeführte Vorrichtung für die Naßreinigung von Gas besteht aus einem horizontalen Körper 1, der Seitenwände 2, eine Stirnwand 3, Beobachtungsfenster 4, 5 und 6, einen Deckel 7 sowie eine Auslaßöffnung 8 aufweist. Dem horizontalen Körper 1 ist einlaßseitig eine als Modul in Form einer Kassette ausgebildete Gaswascheinheit 13 vorgeordnet. In der Gaswascheinheit 13 ist ein Satz von parallelen Rohren 10 angeordnet, die bei Queranströmung zwischen sich als Venturidüsen wirkende Räume bilden. Über den Rohren 10 ist eine Einrichtung 11 zur Berieselung mit einer Waschflüssigkeit vorgesehen, die beispielsweise aus einem Düsen aufweisenden Verteiler bestehen kann.

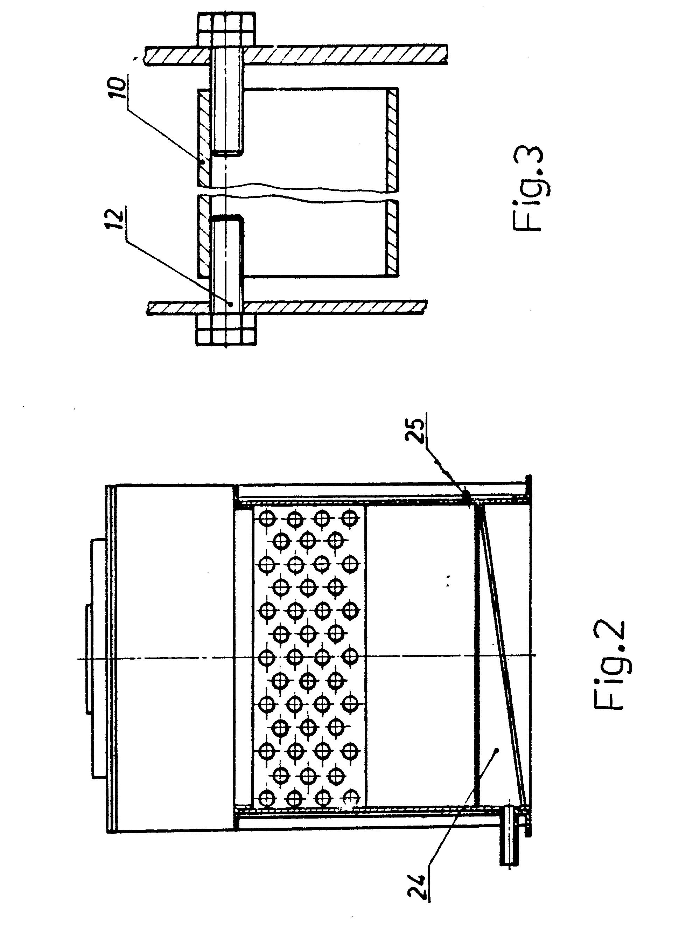

Wie aus Fig. 3 zu ersehen ist, sind die Rohre 10 frei auf Verbindungsbolzen 12 aufgehängt.

Die Gaswascheinheit 13 hat einen oberen Einlaß 9, in den das durch die Pfeile 27 veranschaulichte, zu reinigende Gas quer zu den Rohren 10 und im Gleichstrom mit der Waschflüssigkeit einströmt. Unter den Rohren 10 der Gaswascheinheit 13 ist ein einstellbar Verteiler 14 für das Gas angeordnet.

In dem horizontaler Körper 1 ist auslaßseitig ein in Modulbauweise ausgeführter Separator bzw. Abscheider 15 vorgesehen, der einen Tropfenfänger 16 aufweist. Zwischen der Gaswascheinheit 13 und dem Separator 15 ist eine als Modul ausgeführte Schaumwascheinheit 17 angeordnet, die aus einer Wanne 18 mit einem Gitterboden 19 besteht und einen Schaumstabilisator 20 mit darüber angeordneten Düsen 21 aufweist. Die Schaumwascheinheit 17 ist oberhalb eines zur Gaswascheinheit 13 hin nach unten geneigten Bodens 22 angeordnet, der zusammen mit der Stirnwand 3 und den Seitenwänden 2 des horizontalen Körpers 1 einen Kollektor 23 bildet, der die Gaswascheinheit 13 mit der Schaumwascheinheit 17 verbindet und zu dieser hin orientiert ist. Im tiefsten Teil des geneigten Kollektors 23 ist ein transversaler kegelförmiger Ablaufkanal 24 vorgesehen, wie dies aus Fig. 2 zu ersehen ist. Für die periodische oder ständige Reinigung des Ablaufkanals 24 ist ein Waschstuzten 25 vorgesehen. Die Waschflüssigkeit, im allgemeinen Wasser, die aus den Düsen der Berieselungseinrichtung 11 oder den Düsen 21 über dem Schaumstabilisator 20 ausströmt, füllt den unteren Teil des horizontalen Körpers 1 unter Bildung eines Flüssigkeitsverschlusses 26.

Das in Richtung der Pfeile 27 zugeführte zu reinigende Gas gelangt durch den Einlaß 9 der Gaswascheinheit 13 zusammen mit der aus der Berieselungseinrichtung 11 abgegebenen Waschflüssigkeit in die Zwischenräume zwischen den Rohren 10, die aufgrund der Queranströmung der Rohre dynamisch wie Venturidüsen wirken, was zur Gasansaugung und zur guten Vermischung des verunreinigten Gases mit der Waschflüssigkeit beiträgt. Dabei werden die in dem zu reinigenden Gas vorhandenen Staubteilchen in innigen und direkten Kontakt auf einer großen Oberfläche gebracht. Wenn das Gas aus den Zwischenräumen zwischen den Rohren 10 austritt, erhöht sich sein Druck und verzögert sich seine Geschwindigkeit, wodurch die meisten der befeuchteten Staubteilchen agglomerieren und sich auf der Oberfläche des aus Waschflüssigkeit bestehenden Flüssigkeitsverschlusses 26 absetzen. Das Gas mit den restlichen Staubteilchen und Verunreinigungen wird durch den einstellbaren Verteiler 14 und den zur Schaumwascheinheit 17 nach oben geneigten Kollektor 23 zu dieser als Modul ausgeführten Einheit 17 gefürt. Auf diese Weise bereit die Agglomerierung eines Teils der Staubteilchen in der Gaswascheinheit 13 die physikalisch-chemischen Parameter des Gases für die darauffolgende hochwirksame Reinigung in der ebenfalls als Modul ausgeführten Schaumwascheinheit 17 vor, wobei diese Reinigungs mit einem optimalen Verbrauch an Waschflüssigkeit und Energie erfolgt. Aufgrund der dynamischen Bedingungen in den Venturizwischenräume zwischen den Rohren 10 ergeben sich bei den zugeführten zu reinigenden warmen Gasen Verdampfungsprozesse, was zu einer Temperaturabsenkung bis zu einer gewünschten möglichen Grenze führt, die die Voraussetzung für eine nachfolgende Zwangskondensation und eine wirksame Trennung des Reststaubs von dem Gasstrom in der als Modul gebauten Schaumwascheinheit 17 ist.

In der Schaumwascheinheit 17 strömt das zu reinigende Gas von unten nach oben durch den Gitterboden 19 der Wanne 18, während durch die Düsen 21 Waschflüssigkeit von oben nach unten durch den Gitterboden 19 der Wanne 18 strömt. Infolge der dadurch bedingten Wechselwirkung der beiden Phasen, nämlich Flüssigkeit und Gas, wird eine Schicht aus beweglichem Schaum gebildet, die durch den Schaumstabilisator 20 aufrechterhalten wird. Der Schaumstabilisator 20 sorgt für stabile hydrodynamische Bedingungen und beeinflußt dadurch den Zustand der beweglichen Schaumschicht sehr, wobei sich eine Beschränkung nur aufgrund der vielen mit fortgerissenen Tropfen ergibt. Nach dem Austritt des gereinigten Gases aus der Schaumwascheinheit 17 strömt es durch den Tropfenfänger 16 des in Modulbauweise ausgeführten Separators 15 und durch die Auslaßöffnung 8 ab. Durch die Gaswascheinheit 13 wird eine Vorreinigung des Gases erreicht, die eine optimale Nachreinigung in der nachgeschalteten, aus Modul gebauten Schaumwascheinheit 17, ermöglicht.

## Ansprüche

In Modulbauweise ausgeführte Vorrichtung für die Naßreinigung von Gas mit einem horizontalen Körper (1), dem gaseinlaßseitig wenigstens eine als Modul gebaute Gaswascheinheit (13) mit quer zur Strömungsrichtung des Gases angeordneten Rohren (10), mit einer über den Rohren (10) vorgesehenen Berieselungseinrichtung (11) für eine Waschflüssigkeit und mit einem unter den Rohren (10) angebrachten einstellbaren Verteiler (14) für das Gas zugeordnet ist, und der gasauslaßseitig einen als Modul gebauten Separator (15) mit Tropfenfänger (16) aufweist, **gekennzeichnet** durch eine in dem horizontalen Körper (1) in Strömungsrichtung des Gases nach der Gaswascheinheit (13) angeordnete, ebenfalls als Modul gebaute Schaumwascheinheit (17), welche einen Gitterboden (19), einen Schaumstabilisator (20) und darüber angeordnete Sprühdüsen (21) aufweist, und durch einen unterhalb der Schaumwascheinheit (17) angeordneten, diese mit der Gaswascheinheit (13) verbindenden, von einer Stirnwand (3) und Seitenwänden (2) des horizontalen Körpes (1) sowie einem zur Gaswascheinheit (13) nach unten geneigten Boden (22) gebildeten Kollektor (23), wobei an der tiefsten Stelle des geneigten Bodens (22) ein transversaler, kegelförmiger Ablaufkanal (24) mit Waschstutzen (25) vorgesehen ist.

Fig.1

Fig.2

Fig.3